(19) Europäisches Patentamt

European Patent Office

Office européen des brevets

(11) Veröffentlichungsnummer: **0 405 328 A1**

(12) **EUROPÄISCHE PATENTANMELDUNG**

(21) Anmeldenummer: **90111737.4**

(22) Anmeldetag: **21.06.90**

(51) Int. Cl.⁵: **A21D 2/14**

(30) Priorität: **30.06.89 DE 3921562**

(43) Veröffentlichungstag der Anmeldung:
**02.01.91 Patentblatt 91/01**

(84) Benannte Vertragsstaaten:
**GR**

(71) Anmelder: **Chemische Fabrik Grünau GmbH**
**Robert-Hansen-Strasse 1**
**D-7918 Illertissen(DE)**

(72) Erfinder: **Adams, Wolfgang**
**Hölderlinstrasse 19**
**D-7987 Weingarten(DE)**
Erfinder: **Gölitz, Hartmut**
**Wiesenstrasse 15**
**D-8941 Wolfertschwenden(DE)**
Erfinder: **Sander, Andreas, Dr.**
**Karlsbaderstrasse 19**
**D-7918 Illertissen(DE)**

㊼ **Alkylglycosid-haltige Bindemittel.**

㊷ Die Erfindung betrifft Backmittel, die Alkylglycoside der allgemeinen Formel I
$C_nH_{2n+1}O\text{-}(G)_x$
in der G für Zuckereinheiten mit 5 und/oder 6 C-Atomen steht und die Indices x eine Zahl zwischen 1 und 5 und n eine ganze Zahl zwischen 2 und 18 bedeuten, alleine oder in Kombination mit bekannten Emulgatoren enthalten.

## ALKYLGLYCOSID-HALTIGE BACKMITTEL

Die Erfindung betrifft alkylglycosidhaltige Backmittel, ein Verfahren zur Verbesserung der Eigenschaften von Teigen und Backwaren sowie die Verwendung von Alkylglycosiden in Backmitteln.

Mit Hefe getriebene Backwaren, beispielsweise Brote und Kuchen werden aus Weizenmehl als einziger Mehlsorte oder aus Mehlmischungen, die überwiegend Weizenmehle enthalten, hergestellt. Die Qualität des verwendeten Mehles hat hierbei einen entscheidenden Einfluß auf die Qualität der daraus hergestellten Backwaren.

Während der Lagerung von Mehlen werden infolge enzymatischer Hydrolyse freie Fettsäuren gebildet, die einen Anstieg des Säuregrades des Mehles bewirken. Daraus ergeben sich Veränderungen der Klebereigenschaften, die wiederum die Teigeigenschaften - insbesondere die Dehnbarkeit, die Elastizität und das Gashaltevermögen - beeinträchtigen. Oxidationsprodukte der ungesättigten, freien Fettsäuren haben ferner einen negativen Einfluß auf die Backeigenschaften des Mehles (Ullmanns Encyklopädie der technischen Chemie, Band 8, Seiten 708 - 709, Verlag Chemie Weinheim, 1974).

Zur Verbesserung der Verarbeitungseigenschaften des Mehles sowie zur Verbesserung der Backqualität werden dem Mehl häufig Backmittel zugesetzt (Ullmanns Encyklopädie der technischen Chemie, Band 8, Seiten 709 - 712, Verlag Chemie Weinheim, 1974). Solche Backmittel enthalten üblicherweise Emulgatoren, Milcherzeugnisse, wie Magermilch, Buttermilch und/oder Molke, Enzyme, Zucker, Oxidationsmittel Sojaprodukte und/oder Malzmehl. Darüber hinaus können Backmitteln Bestandteile zur Nähr-, Faser- und Mineralstoffanreicherung zugesetzt werden.

Backmittel enthalten als Emulgatoren üblicherweise Lecithin, Mono-und/oder Diglyceride von Fettsäuren beispielsweise Mono- und/oder Diglyceride von Talg, Mono- und/oder Diglyceride von Fettsäuren, verestert mit organischen Säuren, wie Monoacetylweinsäure, Diacetylweinsäure oder Milchsäure, Sorbitanfettsäureester und/oder Stearoylmilchsäuren als freie Säuren oder in Form ihrer Alkali-und/oder Erdalkalisalze ("Emulgatoren für Lebensmittel", Kapitel C, 3 - 9, 17 - 21 und 21, Springer Verlag, Berlin, 1985). Obwohl mit emulgatorhaltigen Backmitteln Backwaren mit gleichbleibend guter Qualität hergestellt werden können und auch die Verarbeitungseigenschaften der Teige verbessert werden können, sind diese Verbesserungen in vielen Fällen noch nicht zufriedenstellend.

Die Aufgabe der Erfindung bestand daher darin, die mit bekannten Emulgatoren erzielte Verbesserung der Teigeigenschaften sowie der Qualität der Backwaren zu steigern.

Überraschenderweise wurde gefunden, daß mit Backmitteln, die Alkylglycoside enthalten, sowohl die Teigeigenschaften als auch die Qualität von Backwaren erheblich verbessert werden.

Erfindungsgegenstand sind dementsprechend emulgatorhaltige Backmittel, welche dadurch gekennzeichnet sind, daß sie Alkylglycoside der allgemeinen Formel I

$C_nH_{2n+1}O\text{-}(G)_x$

in der G Zuckereinheiten mit 5 und/oder 6 C-Atomen und die Indices x eine Zahl zwischen 1 und 5 und n eine ganze Zahl zwischen 2 und 18 bedeuten, alleine oder in Kombination mit bekannten Emulgatoren enthalten.

Weiterer Erfindungsgegenstand ist ein Verfahren zur Verbesserung der Eigenschaften von Teigen und Backwaren, welches dadurch gekennzeichnet ist, daß man Backmittel, die Alkylglycoside der allgemeinen Formel I

$C_nH_{2n+1}O\text{-}(G)_x$

in der G Zuckereinheiten mit 5 und/oder 6 C-Atomen und die Indices x eine Zahl zwischen 1 und 5 und n eine ganze Zahl zwischen 2 und 18 bedeuten, alleine oder in Kombination mit bekannten Emulgatoren enthalten, mit Mehl oder mit Mehl und anderen Teigbestandteilen bei Temperaturen zwischen 15 und 30 °C mischt und anschließend die Mischungen in an sich bekannter Weise bei Temperaturen zwischen 15 und 30 °C knetet und bei Temperaturen zwischen 180 und 260 °C bäckt.

Backmittel, die erfindungsgemäß Alkylglycoside der allgemeinen Formel I

$C_nH_{2n+1}O\text{-}(G)_x$

alleine oder in Kombination mit bekannten Emulgatoren enthalten, bewirken deutliche Verbesserungen der Eigenschaften sowohl bei Teigen als auch bei fertigen Backwaren. Im Vergleich zu den herkömmlichen emulgatorhaltigen Backmitteln werden bei Verwendung erfindungsgemäßer Backmittel Gebäcke mit weicher Krume, größerem Volumen, feinerer Porung und dünneren Porenwänden erhalten.

Die erfindungsgemäß einzusetzenden Alkylglycoside stellen eine bekannte, aus nachwachsenden Rohstoffen, beispielsweise gemäß US 3 547 828 und US 3 839 318 herstellbare Substanzklasse dar. Erfindungsgemäß werden solche Alkylglycoside in Backmitteln eingesetzt, in denen der Alkylrest für einen Ethyl-, Propyl-, Butyl-, Pentyl-, Hexyl-, Octyl-, Nonyl-, Decyl-, Undecyl-, Dodecyl-, Tridecyl-, Tetradecyl-, Pentadecyl-, Hexadecyl-, Octadecylrest oder für Mischungen aus mehreren der aufgeführten Alkylreste steht. Besonders geeignete Alkylglycoside enthalten Alkylreste mit 10 bis 14 C-Atomen, beispielsweise $C_{12-14}$-Kokosfettalkyl.

Die Zuckerkomponente stammt von Aldosen und/oder Ketosen, beispielsweise Glucose, Fruktose, Mannose, Galactose, Talose, Gulose, Allose, Altrose, Idose, Arabinose, Xylose, Lyxose und/oder Ribose. Bevorzugte Alkylglycoside enthalten Glucose-, Galactose-, Mannose-, Allose-, Altrose-, Gulose-, Idose-, und/oder Taloseeinheiten. Besonders bevorzugte Alkylglycoside sind wegen der guten Reaktionsfähigkeit und leichten Zugänglichkeit der Glucose die Alkylglucoside. Bei der Herstellung von Alkylglycosiden entstehen immer Mischungen aus Alkylmonoglycosiden und Alkyloligoglycosiden. Der Oligomerisierungsgrad x, mit dem die Verteilung von Mono- und Oligoglycosiden angegeben wird, ist eine analytisch ermittelte rechnerische Größe. Im Falle der erfindungsgemäß zu verwendenden Alkylglycoside liegt der Oligomerisierungsgrad x zwischen 1 und 5, vorzugsweise zwischen 1 und 2,5.

In Abhängigkeit von den herzustellenden Backwaren werden erfindungsgemäß Backmittel eingesetzt, die Alkylglycoside oder Mischungen aus Alkylglycosiden und bekannten Emulgatoren enthalten. Der Gehalt an Alkylglycosiden oder Alkylglycosid/Emulgator-Mischungen liegt in den Backmitteln vorzugsweise zwischen 5 und 100 Gew.-%, besonders bevorzugt zwischen 5 und 40 Gew.-%. Als Emulgatoren in Alkylglycosid/Emulgator-Mischungen eignen sich beispielsweise Mono-und/oder Diglyceride von Fettsäuren Mono-und/oder Diglyceride von Fettsäuren, verestert mit organischen Säuren, Sorbitanfettsäureester und/oder Stearoylmilchsäuren als freie Säuren oder in Form ihrer Alkali- und/oder Erdalkalisalze. Das Gewichtsverhältnis Alkylglycoside zu bekannten Emulgatoren liegt vorzugsweise zwischen 0,1 und 10 besonders bevorzugt zwischen 0,6 und 4.

Die erfindungsgemäßen alkylglycosid-haltigen Backmittel enthalten typischer Weise

5 bis 100 Gew.-% Alkylglycoside oder Mischungen aus Alkylglycosiden und bekannten Emulgatoren

0 bis 60 Gew.-% Zucker, beispielsweise Dextrose

0 bis 50 Gew.-% Milcherzeugnisse, beispielsweise Magermilchpulver und/oder Fettpulver

0 bis 30 Gew.-% Sojamehl 0 bis 3 Gew.-% Enzyme, beispielsweise $\alpha$-Amylase

0 bis 3 Gew.-% Oxidationsmittel, beispielsweise Ascorbinsäure, Alkalibromate und/oder Azodicarbonamid

0 bis 20 Gew.-% Malzmehl

0 bis 50 Gew.-% Getreidemahlerzeugnisse, beispielsweise Weizenmehle, Roggenmehle und/oder Quellmehle von Weizen, Stärken und/oder chemisch veränderte Stärken, beispielsweise Maltodextrine

0 bis 50 Gew.-% Faserstoffe, beispielsweise Kleie

0 bis 10 Gew.-% Mineralstoffe, beispielsweise Magnesiumsalze, wie Magnesiumhydroxidcarbonat und/oder Magnesiumsulfat.

Backmittel, enthaltend

5 bis 40 Gew.-% Alkylglycoside oder Mischungen aus Alkylglycosiden und bekannten Emulgatoren

10 bis 50 Gew.-% Zucker

0 bis 45 Gew.-% Milcherzeugnisse

0 bis 30 Gew.-% Sojamehl

0,1 bis 1 Gew.-% Enzyme

0,1 bis 1 Gew.-% Oxidationsmittel

0 bis 10 Gew.-% Malzmehl

0 bis 40 Gew.-% Getreidemahlerzeugnisse, Stärken und/oder chemisch veränderte Stärken

0 bis 30 Gew.-% Faserstoffe und

0 bis 5 Gew.-% Mineralstoffe

werden bevorzugt.

Die Herstellung der erfindungsgemäßen Backmittel erfolgt in der Weise, daß alle Bestandteile in beliebiger Reihenfolge bei Temperaturen zwischen 15 und 30 °C miteinander vermischt werden. In manchen Fällen kann es vorteilhaft sein, flüssige oder pastöse Alkylglycoside sowie wäßrige Alkylglycosidlösungen vor dem Vermischen mit den übrigen festen Bestandteilen durch Aufsprühen auf Trägermaterialien oder durch Sprühtrocknung in eine feste Form zu überführen. Bezogen auf die Alkylglycosidmenge werden üblicherweise 30 - 60 Gew.-% Trägermaterialien wie Maltodextrine und/oder Magermilchpulver, eingesetzt. Die Gesamtmenge an Milcherzeugnissen sowie Getreidemahlerzeugnissen, Stärken und/oder chemisch veränderten Stärken in den erfindungsgemäßen Backmitteln ändert sich hierdurch nicht.

Die erfindungsgemäßen Backmittel werden in Teige, insbesondere in hefegetriebene Teige, in an sich bekannter Weise eingearbeitet, in dem sie vor dem zwischen 15 und 30 °C durchzuführenden Knetprozeß mit Mehl und gegebenenfalls weiteren Teigbestandteilen, beispielsweise Fett, Kochsalz, Hefe und/oder Zucker, bei Temperaturen zwischen 15 bis 30 °C vermischt werden. Pro 100 g Mehl werden vorzugsweise 0,1 bis 5 g, besonders bevorzugt 1 bis 4 g der erfindungsgemäßen Backmittel eingesetzt. Der Begriff "Mehl" umfaßt unterschiedliche Mehlsorten, beispielsweise Weizenmehle, Roggenmehle und/oder Malzmehle, mehlartige Bestandteile, beispielsweise Stärken und/oder Schrote, und/oder Kleie.

Beispiele

Beispiel 1:

Es wurde ein Backmittel für Weizengebäck durch Mischen aller Bestandteile bei 18 °C mit folgender Zusammensetzung hergestellt:

12 Gew.-% $C_{12-14}$-Alkylglucosid mit einem Oligomerisierungsgrad x von 1,5 (100 Gew.-%)

50 Gew.-% Dextrose

0,25 Gew.-% Ascorbinsäure

0,5 Gew.-% α-Amylase 37,25 Gew.-% Weizenmehl, Type 550.

Zum Vergleich wurde $C_{12-14}$-Alkylglucosid mit einem Oligomerisierungsgrad x von 1,5 durch die gleiche Menge an Diacetylweinsäureester von Monoglyceriden (Lamegin[R] DW 8000, Grünau; Fettbasis : gehärteter Talg, Gesamt-Weinsäure 27 bis 30 Gew.-%, Festpunkt 43 bis 46 °C) ersetzt.

2 000 g Weizenmehl, Type 550 wurden mit 40 g Kochsalz, 120 g Bäkkerhefe, 1 160 ml Wasser und entweder mit 30 g erfindungsgemäßem Backmittel oder mit 30 g Lamegin-haltigem Backmittel vermischt und anschließend geknetet. Die mit dem Alkylglucosid-haltigen Backmittel bei 28 °C hergestellten Teige hatten gute Teigeigenschaften und die erhaltenen Brötchen (Backtemperatur: 240 °C) ein hervorragendes Volumen, gute Rösche und Krumenbeschaffenheit. Die Ergebnisse sind in Tabelle 1 zusammengefaßt.

Tabelle 1

| | Alkylglucosid-haltiges Backmittel | Lamegin-haltiges Backmittel (Vergleich) |
|---|---|---|
| Teigbeschaffenheit | nicht klebend, sehr gut maschinell verarbeitbar | nicht klebend, gut maschinell verarbeitbar |
| Volumen der gebackenen Schrippen (Rapsverdrängungsmethode) | 105 % | 100 % |
| Porung | sehr gleichmäßig, fein | gleichmäßig |
| Rösche (1 Stunde nach dem Backen) | gut | gut |

Beispiel 2:

Es wurde ein Backmittel für Kastenweißbrote durch Mischen aller Bestandteile bei 18 °C mit folgender Zusammensetzung hergestellt:

13 Gew.-% $C_{12-14}$-Alkylglucosid mit einem Oligomerisierungsgrad x von 1,3 (50 Gew.-%ige wäßrige Lösung)

10 Gew.-% Monoglycerid (Nutrisoft[R], Grünau, Fettbasis: teilgehärtetes Schweineschmalz)

20 Gew.-% Dextrose

0,25 Gew.-% Ascorbinsäure

0,30 Gew.-% α-Amylase

25 Gew.-% Fettpulver (80 Gew.-% Palmkernfett)

15,45 Gew.-% Magermilchpulver

8 Gew.-% entfettetes Sojamehl

8 Gew.-% Quellmehl.

Zum Vergleich wurde $C_{12-14}$-Alkylglucosid mit einem Oligomerisierungsgrad x von 1,3 durch die gleiche Menge Natriumstearoyllactylat (Prefera[R] SSL 6000, Grünau) ersetzt.

2 000 g Weizenmehl, Type 550 wurden bei 28 °C mit 40 g Kochsalz, 80 g Bäckerhefe 1 140 ml Wasser und entweder mit 30 g Alkylglucosidhaltigem Backmittel oder mit 30 g Natriumstearoyllactylat-haltigem Backmittel vermischt und anschließend geknetet. Das mit Alkylglucosid-haltigem Backmittel bei 250 °C gebackene Kastenweißbrot hatte im Vergleich zu dem mit Natriumstearoyllactylat-haltigem Backmittel gebackenen Kastenweißbrot ein besseres Volumen sowie eine bessere Beschaffenheit der Porung. Die Ergebnisse sind in Tabelle 2 zusammengefaßt.

Tabelle 2

| | Alkylglucosid-haltiges Backmittel | Natriumstearoyllactylat-haltiges Backmittel (Vergleich) |
|---|---|---|
| Volumen der gebackenen Kastenbrote (Rapsverdrängungsmethode) | 104 % | 100 % |
| Gleichmäßigkeit der Porung (nach Dallmann) | + 5 | + 5 |
| Elastizität der Porung (nach Dallmann) | 0 | 0 |
| Beschaffenheit der Porung (nach Dallmann) | 40 | 20 |

EP 0 405 328 A1

Beispiel 3:

Es wurde ein Backmittel für Hefestuten durch Mischen aller Bestandteile bei 18 °C mit folgender Zusammensetzung hergestellt:

50 Gew.-% $C_{12-14}$-Alkylglucosid mit einem Oligomerisierungsgrad x von 1,3 (50 Gew.-%ige wäßige Lösung)

20 Gew.-% Dextrose

0,25 Gew.-% Ascorbinsäure

0,70 Gew.-% α-Amylase

29,05 Gew.-% Magermilchpulver.

Zum Vergleich wurde $C_{12-14}$-Alkylglucosid mit einem Oligomerisierungsgrad x von 1,3 durch die gleiche Menge Lamegin[R] DW 8000 ersetzt.

2 000 g Weizenmehl, Type 550 wurden bei 28 °C mit 200 g Magarine, 200 g Zucker, 120 g Hefe, 60 g Kochsalz, 1 000 ml Wasser und entweder 30 g Alkylglucosid-haltigem Backmittel oder 30 g Lamegin-haltigem Backmittel gemischt und anschließend geknetet. Verglichen mit dem mit Lamegin-haltigem Backmittel hergestellten Hefestuten hatte der mit Alkylglucosid-haltigem Backmittel hergestellte Hefestuten (Backtemperatur: 250 °C) ein besseres Volumen und wurde sensorisch besser beurteilt. Die Ergebnisse sind in Tabelle 3 zusammengefaßt.

Tabelle 3

|  | Alkylglucosid-haltiges Backmittel | Lamegin-haltiges Backmittel (Vergleich) |
|---|---|---|
| Volumen der Hefestuten (Rapsverdrängungsmethode) Porung sensorische Beurteilung | 106 % gleichmäßig sehr gut | 100 % gleichmäßig gut |

**Ansprüche**

1. Emulgatorhaltige Backmittel dadurch gekennzeichnet, daß sie Alkylglycoside der allgemeinen Formel $C_nH_{2n+1}O\text{-}(G)_x$ in der G für Zuckereinheiten mit 5 und/oder 6 C-Atomen steht und die Indices x eine Zahl zwischen 1 und 5 und n eine ganze Zahl zwischen 2 und 18 bedeuten, alleine oder in Kombination mit bekannten Emulgatoren enthalten.

2. Backmittel nach Anspruch 1, dadurch gekennzeichnet, daß der Gehalt an Alkylglycosiden oder Alkylglycosid/Emulgator-Mischungen in Backmitteln zwischen 5 und 100 Gew.-%, vorzugsweise zwischen 5 und 40 Gew.-% liegt.

3. Backmittel nach einem oder beiden der Ansprüche 1 bis 2, dadurch gekennzeichnet, daß in Alkylglycosid/Emulgator-Mischungen das Gewichtsverhältnis Alkylglycoside zu Emulgatoren zwischen 0,1 und 10, vorzugsweise zwischen 0,6 und 4 liegt.

4. Backmittel nach einem oder mehreren der Ansprüche 1 bis 3, dadurch gekennzeichnet, daß Backmittel Alkylglycoside der allgemeinen Formel I enthalten in der G Glucose-, Galactose-, Mannose-, Allose-, Altrose-, Gulose-, Idose-und/oder Taloseeinheiten bedeuten und die Indices x eine Zahl zwischen 1 und 2,5 und n eine ganze Zahl zwischen 10 und 14 darstellen.

5. Backmittel nach einem oder mehreren der Ansprüche 1 bis 4, dadurch gekennzeichnet, daß Backmittel Alkylglucoside enthalten.

6. Verfahren zur Verbesserung der Eigenschaften von Teigen und Backwaren, dadurch gekennzeichnet, daß man Backmittel, die Alkylglycoside der allgemeinen Formel I $C_nH_{2n+1}O\text{-}(G)_x$ in der G für Zuckereinheiten mit 5 und/oder 6 C-Atomen steht und die Indices x eine Zahl zwischen 1 und 5 und n eine ganze Zahl zwischen 2 und 18 bedeuten, alleine oder in Kombination mit bekannten

7

Emulgatoren enthalten, mit Mehl oder mit Mehl und anderen Teigbestandteilen bei Temperaturen zwischen 15 und 30 °C mischt und anschließend die Mischungen in an sich bekannter Weise bei Temperaturen zwischen 15 und 30 °C knetet und bei Temperaturen zwischen 180 und 260 °C bäckt.

7. Verfahren nach Anspruch 6, dadurch gekennzeichnet, daß pro 100 g Mehl 0,1 bis 5 g vorzugsweise 1 bis 4 g Backmittel eingesetzt werden.

8. Verfahren nach einem oder beiden der Ansprüche 6 bis 7, dadurch gekennzeichnet, daß Backmittel eingesetzt werden, die zwischen 5 und 100 Gew.-%, vorzugsweise zwischen 5 und 40 Gew.-% Alkylglycoside oder Alkylglycosid/Emulgator-Mischungen enthalten.

9. Verfahren nach einem oder mehreren der Ansprüche 6 bis 8, dadurch gekennzeichnet, daß in Alkylglycosid/Emulgator-Mischungen das Gewichtsverhältnis Alkylglycoside zu Emulgatoren zwischen 0,1 und 10, vorzugsweise zwischen 0,6 und 4, liegt.

10. Verfahren nach einem oder mehreren der Ansprüche 6 bis 9, dadurch gekennzeichnet, daß Backmittel eingesetzt werden, die Alkylglycoside der allgemeinen Formel I, in der G Glucose-, Galactose-, Mannose-, Allose-, Altrose-, Gulose-, Idose-und/oder Talloseeinheiten und die Indices x eine Zahl zwischen 1 und 2,5 und n eine ganze Zahl zwischen 10 und 14 bedeuten, enthalten.

11. Verfahren nach einem oder mehreren der Ansprüche 6 bis 10, dadurch gekennzeichnet, daß Alkylglucosid-haltige Backmittel eingesetzt werden.

12. Verwendung von Alkylglycosiden der allgemeinen Formel I

$$C_nH_{2n+1}O\text{-}(G)_x$$

in der G für Zuckereinheiten mit 5 und/oder 6 C-Atomen steht und die Indices x eine Zahl zwischen 1 und 5 und n eine ganze Zahl zwischen 2 und 18 bedeuten, alleine oder in Kombination mit bekannten Emulgatoren in Backmitteln.

13. Verwendung nach Anspruch 12, dadurch gekennzeichnet, daß Backmittel mit einem Gehalt an Alkylglycosiden oder Alkylglycosid/Emulgator-Mischungen zwischen 5 und 100 Gew.-%, vorzugsweise zwischen 5 und 40 Gew.-% verwendet werden.

14. Verwendung nach einem oder beiden der Ansprüche 12 bis 13, dadurch gekennzeichnet, daß in Alkylglycosid/Emulgator-Mischungen das Gewichtsverhältnis Alkylglycoside zu Emulgatoren zwischen 0,1 und 10, vorzugsweise zwischen 0,6 und 4 liegt.

15. Verwendung nach einem oder mehreren der Ansprüche 12 bis 14, dadurch gekennzeichnet, daß solche Alkylglycoside der allgemeinen Formel I verwendet werden, in der G Glucose-, Galactose-, Mannose-, Allose-, Altrose-, Gulose-, Idose-und/oder Talloseeinheiten und die Indices x eine Zahl zwischen 1 und 2,5 und n eine ganze Zahl zwischen 10 und 14 bedeuten.

16. Verwendung nach einem oder mehreren der Ansprüche 12 bis 15, dadurch gekennzeichnet, daß Alkylglucoside verwendet werden.

Europäisches Patentamt

**EUROPÄISCHER RECHERCHENBERICHT**

Nummer der Anmeldung

EP 90 11 1737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 390 507 (S.M. CANTOR) <br> * Seite 1, Spalte 1, Zeilen 33-36 * <br> --- | 1 | A 21 D 2/14 |
| A | US-A-3 597 417 (D.V. MYHRE) <br> --- | | |
| A | FR-A-2 055 595 (ATLAS CHEMICAL INDUSTRIES) <br> * Anspr.; Seite 5, Zeilen 15-18 * <br> --- | 1 | |
| A | US-A-3 949 093 (C.L. MEHLTRETTER et al.) <br> ----- | | |

|  | RECHERCHIERTE SACHGEBIETE (Int. Cl.5) |
|---|---|
| | A 21 D <br> C 07 H <br> A 23 L <br> B 01 F |

Der vorliegende Recherchenbericht wurde für alle Patentansprüche erstellt

| Recherchenort | Abschlußdatum der Recherche | Prüfer |
|---|---|---|
| DEN HAAG | 01-10-1990 | COUCKE A.O.M. |